# EUROPEAN PATENT APPLICATION

(11) **EP 0 790 285 A1**
(43) Date of publication of application: **20.08.1997**
(21) Application number: 95910828.3
(22) Date of filing: 02.02.1995
(51) Int. Cl.: C09D 163/02, C09D 5/24

(54) **ELECTRICALLY CONDUCTING PAINT**

(30) Priority: 01.11.1994 RU 94038039
(71) Applicant: HUMAX TECHNOLOGY INC., Tokyo 162 (JP)
(72) Inventor: TITOMIR, Alexandr Kozmovich, Moscow, 109017 (RU); PLATONOV, Jury Mikhailovich, Moscow, 127018 (RU)
(74) Representative: Behnisch, Werner, Dr.
(86) International application number: RU9500019
(87) International publication number: WO9613557

(57) **Abstract**

This invention relates to a field of manufacturing the conductive coating material using mainly a resist forming polymer binder and can be applied mainly in technical fields for forming a conductive resist film over a large area of a substrate for use in room heating equipment and system. The conductive coating material is a mixture of an epoxy binder, a carbon-containing filler, a hardener, and an organic solvent. The carbon-containing filler is made up of a mixture of graphite and carbon black, with the mass ratio of graphite to carbon black being in the range of 0.1 to 1.0, and the ratio by mass of these components are:
- epoxy binder:: 8-20%
- carbon-containing filler:: 11-39%
- hardener:: 0.5-1.5%
- organic solvent:: remnant.

## Description

### Technical Field

The present invention relates to a manufacture of a film forming polymer binder-based coating material, which can be applied to a variety of technical fields for forming a film (resist) of conductive coating material over an electrically insulating substrate that has a large area of heating surface for directly converting electric energy into thermal energy.

### Present Technical Level

A conductive coating material based on a polymer film forming binder (French Patent No. 2,662,703) has been known. This is made from microfine particles of a conductive filler, a mixture of polymer binder solvent, silver (60-70% by weight of the composition) and graphite (0.5-10% by weight).

Resist films based on the known conductive coating material have a specific volume resistivity of around 10³-10⁶Ωcm after being dried. This high specific resistance of the resist film is explained by the fact that adjacent silver particles are virtually not in the direct, firm contact with one another at the level of silver content mentioned above (silver in its pure form has a small specific resistivity of 1.49x10⁻⁶Ωcm). This is because these particles are enclosed by polymer binders during the component dispersion in the manufacture of the conductive coating material.

As a result, the contact between adjoining silver particles in the resist film occurs mainly through a layer of binder material. The presence of graphite as one component of the known coating materials contributes somewhat to reduction in the specific resistivity of the resist film, because the microfine graphite particles have high porosity and thus can adsorb the binders and solvents, resulting in direct, firm contact between the surfaces of the adjoining graphite particles. The known coating materials, however, contain silver particles as one of their components and because the size of silver particles is greater than that of graphite pores, the graphite pores are closed by the metal (silver) particles during the dispersion process.

As a result, firm and direct contact between all graphite particles in the resist film is not assured. Considering the fact that the overall contents of the graphite particles in the known coating materials are very small compared with the silver particle contents, the specific resistivity of the resist film is determined mainly by the specific resistivity of the binder forming the resist film, which has a disproportionately high order of magnitude compared with those of graphite and silver.

Our calculations show that when a resist film of conventional components is formed over an area of 1 square meter of an insulating substrate to a thickness of 25 microns, applying the voltage of 220V to the film (the specific volume resistivity of the resist film is assumed to be 10³Ωcm) results in about 2 watts of heat being released in this sample.

Comparing this output with that of an ordinary household oil radiator (800-1200 watts) having the same heat radiation surface area, a conclusion can be drawn that the conventional conductive coating materials cannot be used for the manufacture of the conductive heating surfaces in the heating apparatuses or systems.

This is explained by the fact that the resist films based on the known components have high specific volume resistivity (10³-10⁶Ωcm). In addition, the conductive coating materials of known components are very expensive and therefore their use is limited mainly to the space and aircraft industries.

Another conductive coating material based on a polymer film forming binder is also known (WO, PCT application No. 92-03509). This coating material, too, contains a polymer binder solvent and microfine particles of conductive filler occupying 40-80% by weight of the composition. In this conductive filler, graphite or carbon particles occupy 10-50% by weight of the composition.

This known conductive coating material, according to the specification of the above PCT application, can contain the conductive filler in the form of a mixture of microfine metal particles and carbon-containing particles or in the form of only carbon-containing particles.

The drawback of the conductive coating material containing the conductive filler in the form of a mixture of metal particles and carbon-containing particles is as described above.

In this case, the specific volume resistance of the resist film based on the known components is determined by the specific resistivity of the polymer binder and is of the order of 10³-10⁶Ωcm.

With this level of specific resistivity, the resist film cannot be used as a heating element in electric heating apparatuses or systems.

Forming this conductive coating material by using the conductive filler in the form of only microfine carbon-containing particles, however, does not produce a satisfactory result.

This is because, to achieve a significant reduction in the specific volume resistivity of the resist film, which is based on the conductive coating material of known components, not only is it necessary to increase the contents of the carbon-containing particles in the composition of the known coating material but also a certain value of contents of pure carbon in the particles and a certain value of adsorption surface area of the carbon-containing particles as a whole are required. This, however, is not considered in the conventional technical solutions.

Therefore, it is practically impossible to produce a resist film having required electro-physical characteristics (for use in a variety of voltage distribution nets) by using the known conductive coating material. Furthermore, in the conventional conductive coating materials, increasing the percentage of pure carbon lowers the elasticity of the resist layer made of the conductive coating materials, which in turn significantly reduces the mechanical strength of the resist film of the coating material. The longevity of such a resist film therefore is short, limiting the fields of its use.

Still another conductive coating material is also known which is used to produce a conductive resist film with a stable physical and mechanical properties under high-temperature and high-humidity environments (JP 61-276868). This known conductive coating material includes 20-70% carbon particles by mass, 30-80% binder epoxy lacquer by mass, and 0.1-2 parts hardener (imidazole) to the 100 parts binder by mass.

The drawback of this known conductive coating material is that the high percentage of the carbon-containing filler included in the coating material in the form of carbon powder (carbon black) has undesired effects on the mechanical strength of the conductive resist film of the conventional composition.

This limits the potential of its use and shortens its longevity.

### Novel Features of the Invention

The invention is intended to achieve the task of developing by changing the composition qualitatively and quantitatively a conductive coating material which, when deposited over an insulating substrate, forms a conductive resist film with a high mechanical strength, a high elasticity and a low specific volume resistivity (10⁻³ to 10⁻⁴Ωcm). With this invention, it is possible to use the conductive resist film for a variety of voltage distribution nets and as a heating element in electric heating apparatuses and systems that can be used under various conditions.

This task can be realized by a conductive coating material which contains epoxy binder, carbon-containing filler, hardener and organic solvent in the following percentages by mass and which contains a mixture of graphite and carbon black as the carbon-containing filler with the ratio by mass of graphite to carbon black being in the range of 0.1-1.0.
- Epoxy binder: 8 - 20%
- Carbon-containing filler: 11 - 39%
- Hardener: 0.5-1.5%
- Organic solvent: Remnant

The conductive coating material of this invention includes in the above filler a certain percentage of carbon black and a certain percentage of graphite. This combination realizes high density contact among all particles of the carbon-containing filler in the conductive resist film made of the conductive coating material of the invention.

As a result, the conductive resist film of the conductive coating material has a specific volume resistivity in the range of 10⁻³ to 10⁻⁴Ωcm, which is several orders of magnitude smaller than that obtained with the preceding technical solutions mentioned above.

The specific ratio between carbon black and graphite in the carbon-containing filler defined in this invention improves the mechanical strength of the resist film made of the conductive coating material and gives the resist film the elasticity required for a particular condition of use.

The method of making the conductive coating material of this invention and the resist film of the conductive coating material is realized as follows.

All the components (resist forming epoxy binder, fine carbon-containing filler and organic solvent) with a predetermined ratio are put in an agitating device, in which they are agitated. Then, the mixture is taken out of the device and, immediately before being applied to the electric insulating substrate, is mixed with 0.5-1.5% hardener by volume.

The agitating device may include a bead mill, a dissolver and a high-speed mixer. The coating material is applied by a brush, roller, air spray, electric coating, airless spray or flow coating. The most appropriate method of applying the conductive coating material to the insulating substrate is by an aerosol.

### Best Mode of Realizing the Invention

The conductive coating material of this invention includes the following components with the mass ratios shown at the right.
- Epoxy binder: 8-20%
- Carbon-containing filler: 11-39%
- Hardener: 0.5-1.5%
- Organic solvent: Remnant

The carbon-containing filler includes 0.1-1.0 parts graphite to 1 part carbon black by mass.

To make the conductive coating material of this invention, it is preferred that a two-liquid system be used which uses a so-called diene resin, which is a reactive oligomer substance with solubility and meltability, containing as epoxy binder epoxy oligomer, epichlorhydrin and diphenylol propane in the diene group with a molecular weight of 400 to 4000.

The most desired for the binder is a resin based on the epoxy oligomer with a molecular weight of 400-1000. For example, the following compositions may be used.
3 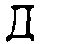 -22: A mixture of 22.1-23.5% epoxy group, 0.007% or less chlorine ion, 1.00% or less entire chlorine, 0.5% or less volatile substance, and hardener (maleic anhydride) undergoes gelling at 100°C for more than 6 hours.
3 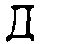 -20: A mixture of 19.9-22.0% epoxy group, 0.007% or less chlorine ion, 1.00% or less entire chlorine, 1.0% or less volatile substance, and hardener (maleic anhydride) undergoes gelling at 100°C for more than 4 hours.
3 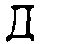 -16: A mixture of 16.0-18.0% epoxy group, 0.007% or less chlorine ion, 0.75% or less entire chlorine, 0.8% or less volatile substance, and hardener (maleic anhydride) undergoes gelling at 100°C for more than 3 hours.
3 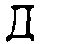 -8: A mixture of 8.0-10.0% epoxy group, 0.007% or less chlorine ion, 0.60% or less entire chlorine, 0.8% or less volatile substance, and hardener (maleic anhydride) undergoes gelling at 100°C for more than 2 hours.
3 -40: A polymer product with solubility and meltability made from epichlorhydrin condensate containing diphenylol propane in alkali medium; epoxy group 13-15% by mass, chlorine ion 0.0035% or less, and saponifiable chlorine 0.35% or less.
3 -41: epoxy group 6.3-8.3%, chlorine ion 0.0045% or less, and saponifiable chlorine 0.25% or less. Aromatic carbon, ketone, ether and hydrocarbon containing chlorine are used as organic solvents. More preferable substances include industrial acetone (dimethyl ketone CH₃COOC₂H₅, molecular weight = 88.1), butyl acetate (normal butyl acetate CH₃COOC₄H₉, molecular weight = 116.16), industrial ethyl cellosolve (monoethyl ether ethylene glycol C₂H₅OCH₂CH₂OH, molecular weight = 90.12), coal toluene and oil shale toluene (methylbenzol C₆H₅CH₃, molecular weight = 95.14), petrol xylol (dimethylbenzol (CH₃)₂C₆H₄, molecular weight = 106.17) and their mixture.

Hardener may include aromatic polyamine, polyamide, di-isocyanate and their modifications, and 3-boron fluoride, acids and their anhydrides. The most preferred are imidazolines, and primary, secondary and tertiary amines. For example, they include distilled polyethylene polyamine (mainly diethylene triamine, triethylene tetramine and tetraethylenepentamine; basic substance 70% or more by mass, water 2.0% or less by mass, chlorine ion 0.01% or less by mass, and mineral inpurities 0.1% or less by mass), or amine hardener N1 (ethyl alcohol solution or isopropyl alcohol solution of hexamethylenediamine with the contents of hexamethylenediamine ranging from 48% to 52%).

Carbon black is used in combination with graphite as a conductive carbon-containing filler. The most preferred are, for instance, carbon Π 268- 3 (active carbon produced by imperfectly burning natural gas together with fats and oils in a combustion chamber; particle diameter in 50-70nm; adsorption rate of dibutyl phthalate 60-70 cm³ for granular carbon and 80-100 cm³ for nongranular carbon; PH of suspension in water 8.5-10 for granular carbon and 6.5-8.5 for nongranular carbon; density 1.87 cm³; fats and oils 0.7 liters/kg (ml/g)); or industrial carbon Π 803 (inert; produced when oxidizing liquid hydrocarbon material by heat; has a low dispersion index and neutral structural index; adsorption of dibutyl phthalate 76-90 cm³ for granular carbon and 86-100 cm³ for nongranular carbon; PH for suspension in water 7-9% for granular carbon and 7.5-9.5% for nongranular carbon; and ash content 0.45% or less for granular carbon and 0.20 or less for nongranular carbon); or special low ash content graphite (crystal graphite; produced by refining separately or in combination natural graphite ores and graphite-containing wastes produced during metal making that were subjected to additional chemical treatment; ash content 0.5% or less; water 0.2% or less by mass; and released volatile substances including floatation ore dressing agents 0.2% or less); or special high-purity powdered graphite (particles smaller than 90 microns in diameter 90% or more by mass, particles 90-140 microns in diameter 10% or less; ratios of mineral inpurities by mass: aluminum 1x10⁻⁵, boron 1x10⁻⁵, iron 1x10⁻⁵, silicon 1x10⁻⁵, magnesium 1x10⁻⁵, manganese 1x10⁻⁶, copper 1x10⁻⁶ and titanium 1x10⁻⁶).

Carbon is produced by decomposing liquid hydrocarbon materials such as gasoline, toluene and naphthalene at temperatures 1000°C or higher.

The liquid materials may be substituted by gaseous materials such as ethylene, propylene, propane, methane or carbon monoxide (CO).

It is desired that the contents of carbon black in the carbon-containing filler be more than 95% (by weight) and specific adsorption area more than 230 m²/g.

Particles of graphite have a branch structure. Their distinguished sizes are in the range of 0.3-30nm. This graphite improves the elasticity of the resin made of the conductive coating material of this invention.

To make this invention more clearly understood, the following examples are offered regarding the composition of the conductive coating material of this invention and the conductive resist film made of the conductive coating material.

### Example 1

The first example uses the following.
- Epoxide-diene resin 3 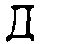 -22, 3 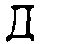 -20, 3 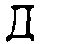 -16 and 3 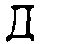 -8 are used as an epoxy binder.
- Carbon black Π 803 and special low ash graphite are used as a carbon-containing filler.
- A mixture of 1:1:1 xylol, acetone and butyl acetate is used as an organic solvent.
- Amine-based hardener N1 is used when forming a resist film from the conductive coating material of this invention.

### Example 2

- Epoxide-diene resin 3 -40 is used as an epoxy binder.
- Carbon black Π -268- 3 and special high-purity powdered graphite are used as a carbon-containing filler.
- A mixture of 1:1:1 xylol, acetone and butyl acetate is used as an organic solvent.
- Amine-based hardener N1 is used when forming a resist film from the conductive coating material of this invention.

### Example 3

Third example uses the following.
- Epoxide-diene resin 3 -41 is used as an epoxy binder.
- Carbon black Π 268- 3 and special high-purity powdered graphite are used as a carbon-containing filler.
- A mixture of 3:1:5 acetone, ethyl acetate and toluene is used as an organic solvent.
- Amine-based hardener N1 is used when forming a resist film from the conductive coating material of this invention.

The compositions of the first, second and third example are prepared according to the above prescriptions.

Percentages by mass of the components in the compositions of the first to third example are listed in the table below.

| Component | Composition (% by mass) | | |
|---|---|---|---|
| | Ex.1 | Ex.2 | Ex.3 |
| Epoxide-diene resin 3 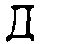 -22 (3 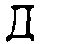 -20, 3 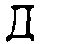 -16, 3 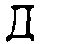 -8) | 8 | - | - |
| Epoxide-diene resin 3-40 | - | 14 | - |
| Epoxide-diene resin 3 -41 | - | - | 20 |
| Carbon black Π 268- 3 | - | 22 | 14 |
| Industrial carbon black Π 803 | 6 | - | - |
| Special high-purity powdered graphite | - | 17 | 11 |
| Special low ash content graphite | - | - | - |
| Amine hardener N1 | 1 | 1 | 1 |
| Solvent (1:1:1 xylol : acetone : butyl acetate) | Remnant | Remnant | - |
| Solvent (1:1:1 acetone : ethyl acetate : toluene) | - | - | Remnant |

First example (see the above table: first column): Composition of conductive coating material for making a conductive resist film used for supply voltage of 12V.

Second example (see the above table: second column): Composition of conductive coating material for making a conductive resist film used for supply voltage of 110V.

Third example (see the above table: third column): Composition of conductive coating material for making a conductive resist film used for supply voltage of 220V.

In these examples, it was verified with experiments that the resist films of the qualitative and quantitative conditions listed above can produce heating temperatures in the range of 30-100°C at given supply voltages.

The conductive resist film that is obtained by applying the conductive coating material of this invention over the electrically insulating substrate has the following characteristics.
- Low specific resistance (10⁻³Ωcm to 10⁻⁴Ωcm). This allows utilization of both safe voltages (12-36V) and industrial voltages (127-220V) when the conductive resist film is used as a heating body in electrical heating apparatuses and systems.
- High adhesion. This allows use of a wide range of substrates including glass, laminated plastics and rubber.
- Possibility for making a large area of heating surface.
- Possibility for making a conductive resist film that has required output temperature parameters in the temperature range of 30-300°C.
- Economy
- Possibility of making an electric heating film with a thermal load of 150 watts/m² to 1600 watts/m².
- Optimum condition of heat conductivity of the electric heating film produced.

### Industrial Applicability

The conductive resist film formed of the conductive coating material of this invention can be applied mainly as the following thermal energy sources because of the characteristics described above.
- As primary heat sources in homes and industrial buildings and as auxiliary, easily assembled heat sources.
- As electric facilities for heating rooms and floors.
- As drying machines for agricultural produce and for routine purposes.
- As medical electric heaters.
- As seat heaters in automobile.
- For melting and drying snow on runways in airports and for many other systems and equipment.

## Claims

1. A conductive coating material comprising:
an epoxy binder;
a carbon-containing filler;
a hardener; and
an organic solvent,
wherein the carbon-containing filler includes a mixture of graphite and carbon black, with the mass ratio of graphite to carbon black being in the range of 0.1 to 1.0, and the ratio by mass of these components are:
epoxy binder: 8-20%
carbon-containing filler: 11-39%
hardener: 0.5-1.5%
organic solvent: remnant.
